# EUROPEAN PATENT SPECIFICATION

(11) **EP 1 428 645 B1**
(45) Date of publication and mention of the grant of the patent: **02.05.2007**
(21) Application number: 03078330.2
(22) Date of filing: 22.10.2003
(51) Int. Cl.: B29C 45/16

(54) **Method and device for manufacturing multi-component injection molding pieces**
Verfahren und Vorrichtung zum Spritzgiessen von mehrkomponentigen Gegenständen
Procédé et dispositif pour le moulage par injection de pièces multi-composants

(30) Priority: 18.11.2002 BE 200200648; 27.01.2003 BE 200300057
(43) Date of publication of application: 16.06.2004
(73) Proprietor: Boutech, naamloze vennootschap, 8870 Izegem (BE)
(72) Inventor: Boucherie, Bart Gerard, 8870 Izegem (BE)
(74) Representative: Donné, Eddy

(56) References cited:
- EP-A- 1 226 916
- WO-A-98/35808
- GB-A- 908 298

## Description

The present invention concerns a method and a device for manufacturing injection molding pieces, in particular injection molding pieces consisting of at least two components.

In particular, it concerns a method of the type whereby at least one first injection molding piece is formed of a first component in a first mold impression which is defined by at least a first and a second mold part, and at least one second injection molding piece is formed by putting the first injection molding piece in a second mold impression which is also defined by means of at least a first and a second mold part, and by providing a second component on the first injection molding piece in said second mold impression.

Devices whereby a method of this type is applied are generally known and can be made in different embodiments.

An example thereof is known among others from EP 0,836,923, whereby every first injection molding piece of the first mold impression is transferred to the second mold impression by means of a transfer part which is active between the first injection and the second injection between the opened mold parts.

Another example thereof is known from WO 98/35808, whereby use is made of what is called a stack mold, equipped with a rotating central mold part, whereby a first injection molding piece is injected on one side of the central mold part, this injection molding piece is subsequently brought to the other side as a result of the rotation of the central mold part, and a second injection molding piece is subsequently formed on said other side by providing a second component on the first injection molding piece. The technique known from WO 98/35808 is disadvantageous in that, in order to form injection molding pieces of two components, the use of what is called a stack mold is necessary. As the first component is injected on one side and the second on the other side, this moreover creates a disadvantage in that the distribution of the forces as the mold closes is not always optimal for obtaining a minimal total closing force, which is usually desirable in case of a stack mold. Document EP 1226916 discloses a method and a device in accordance with the preamble of claims 1 and 17 respectively.

In general, the present invention aims a method of the above-mentioned type, offering several advantages in comparison to the embodiments known until now, and which in particular is made such that a smooth and efficient production of injection molding pieces made of two components at a high output rate becomes possible, whereby, at least according to specific preferred embodiments, also the aforesaid disadvantages of the known embodiments are remedied.

To this end, the invention in the first place concerns a method for manufacturing injection molding pieces consisting of at least two components, whereby a first injection molding piece of a first component is formed in a first mold impression and a second injection molding is formed by putting the first injection molding piece in a second mold impression and by applying a second component on the first injection molding piece, whereby a mold with at least three series of mold parts is used, namely a first series, a second series and a third series respectively, whereby every series has at least one first mold part which can form a wall for the first mold impression when forming a first injection molding piece, as well as at least one second mold part which can form a wall for the second mold impression when forming a second injection molding piece; in that the first series of mold parts and the second series of mold parts can alternately work in conjunction with the third series of mold parts, in order to inject at least one first injection molding piece as well as at least one second injection molding piece in the mold impressions formed thereby; and whereby, during the alternating presentation, a mutual repositioning of every first injection molding piece concerned is obtained, such that it ends up in the accompanying second mold impression.

By making use of at least three series of mold parts, it becomes possible to make production cycles follow up very quickly, and possibilities are moreover created to smoothly carry out additional operations without the production process being slowed down thereby.

According to a first possibility, the aforesaid repositioning is realized by changing the places of the first injection molding pieces after their production by removing them from a mold part with which they have been made into another mold part which is part of the same series, for example by means of a transfer part which is already active between the mold parts of the series concerned.

According to a second possibility, the aforesaid repositioning is realized by leaving the first mold injection pieces, after their production, when opening the mold, on the mold part of the first series in which they have been made, on the mold part of the second series in which they have been made respectively, and by making sure that, at the next co-operation of the first series with the third series, of the second series with the third series respectively, the mutual position of the mold parts of the first series in relation to the third series, of the second series in relation to the third series respectively, is changed.

In a practical embodiment, the mutual position is hereby changed by subjecting one or several of the aforesaid series of mold parts to a rotation, in particular in relation to a support upon which they have been provided.

According to a third possibility, the aforesaid repositioning is realized by leaving the first injection molding pieces, after their making, when opening the mold, on the mold part concerned of the third series, and by making use of a first series of mold parts and a second series of mold parts whose mold parts assume opposite positions. Thus, only the position of the third mold part has to be changed between the different molding cycles.

The first series of mold parts and the second series of mold parts preferably alternately co-operate with the third series of mold parts by making the first and second series on the one hand, and the third series on the other hand carry out a mutual rotational movement. In a particularly practical embodiment, this rotational movement is realized around an axis of rotation which is parallel to the closing direction of the mold parts concerned. This offers as a major advantage that the first injection molding parts of the first mold impressions are exclusively transferred to the second mold impressions in planes which are mainly parallel to the land areas, so that the mold parts do not necessarily have to be opened far. Moreover, the movement can be quicker than in the case where the first injection molding pieces have to be transferred from one side of a mold part to another side situated on the back side thereof.

According to a particularly preferred embodiment, a third series of mold parts is used which is erected such that it cannot rotate, and the first series of mold parts and the second series of mold parts are rotated around an axis of rotation situated outside the third series. Thus, the mold parts of the first series and of the second series are alternately situated outside the actual zone in which the injection molding cycles take place, so that these mold parts are particularly easily accessible in these places, for example for repositioning the first injection molding pieces or for carrying out other operations, such as carrying off the second injection molding pieces. During these operations, it is possible to implement an injection molding cycle on the other mold parts, such that a minimum of time is lost during the production process.

According to another particularly preferred embodiment, the first series of mold parts and the second series of mold parts alternately co-operate with a third series of mold parts by making the first and second series on the one hand, and the third series on the other hand carry out a mutual translation movement, in particular a straight translation movement diagonally to the closing direction of the mold parts concerned. This offers the additional advantage that possible lines for cooling medium and possible pneumatic, hydraulic or electric lines which are required to control certain parts can be connected more easily to the moving mold parts, as opposed to rotating mold parts whereby the aforesaid connections are more difficult to realize and as the rotational movements are more prone to wear. Moreover, this embodiment has a short indexing time, in particular in the case of large molds. Finally, such an embodiment requires limited adjustments to existing injection molding machines in order to convert them into a device according to the invention, and this embodiment can moreover be applied to injection molding machines with what are called Holmen or longitudinal girders.

It is clear that, according to the present invention, also other embodiments are possible whereby, while the mold is being closed, each time at least one series of mold parts is kept outside the injection molding cycle. Thanks to this particularly preferred characteristic of the invention, it is possible to carry out operations on the mold part concerned outside the zone in which the injection molding cycle is implemented, while an injection molding cycle is being implemented on the other mold parts.

Further, the invention also concerns a device for manufacturing injection molding pieces, in particular according to the aforesaid method, which mainly consists of a mold with at least three series of mold parts, a first series, a second series and a third series respectively, whereby every series has at least one first mold part which can form a wall for the first mold impression when a first injection molding piece is formed, as well as at least one second mold part which can form a wall for the second mold impression when forming a second injection molding piece; one or several motion mechanisms which make it possible for the first series of mold parts and the second series of mold parts to alternately work in conjunction with the third series of mold parts, in order to inject at least one first injection molding piece as well as at least one second injection molding piece in the mold impressions formed thereby; means for opening and closing the mold; and injection molding aggregates for injecting the respective parts; whereby this device also comprises means which make it possible, when the aforesaid mold parts are alternately presented to one another, to provide for a mutual repositioning of every first injection molding piece concerned, such that it ends up in the accompanying second mold impression.

According to the most preferred embodiment, the mold parts of one and the same series are made as one whole, in other words one and the same mold block, so that they can be easily moved simultaneously.

As will become clear from the following description, the invention can also be applied in an advantageous manner in molds which are embodied as a stack mold.

According to the most preferred embodiment, the third series of mold parts and a first series of mold parts or a second series of mold parts working in conjunction therewith during an injection molding cycle are concentrated in a single local sealing zone, preferably a rectangular zone, while the other series of mold parts, i.e. the second series of mold parts or the first series of mold parts, then protrudes from said sealing zone. In particular, the series of mold parts working together during an injection molding cycle on the one hand, and the other aforesaid protruding other series of mold parts are preferably situated on top of each other. In this manner is obtained a slender construction for the device 1, as a result of which it occupies less space. Moreover, the construction can be made very light in this manner.

In order to better explain the characteristics of the invention, the following preferred embodiments are described as an example only without being limitative in any way, with reference to the accompanying drawings, in which:
figure 1 schematically represents a device according to the invention in perspective;
figure 2 represents a section according to line II-II in figure 1;
figures 3 to 7 show different views as a section or seen in perspective for different steps of the applied method;
figures 8 to 10 represent three more embodiments of a device according to the invention;
figure 11 represents a section according to line XI-XI in figure 10;
figure 12 represents another embodiment of a device according to the invention;
figure 13 represents a section according to line XIII-XIII in figure 12;
figures 14 and 15 represent two more embodiments of a device according to the invention;
figures 16 to 18 represent another variant of the invention for different positions.

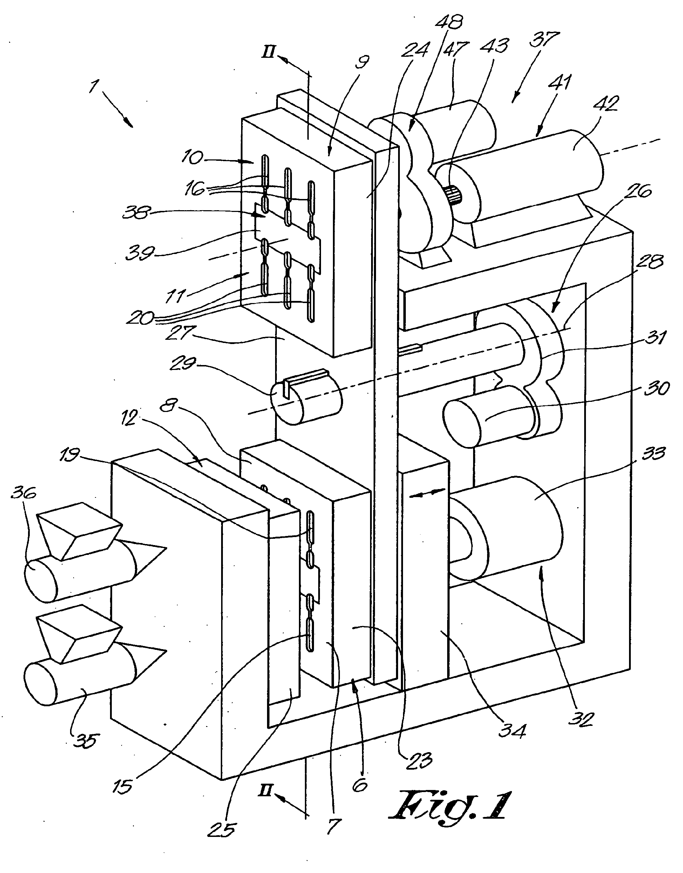

As represented in figures 1 to 7, the invention concerns a device 1 and a method used thereby which are designed for making injection molding pieces consisting of at least two components, whereby a first injection molding piece 2 is first made from a first component 3, and a second injection molding piece 4 is subsequently made by applying a second component 5 on the first injection molding piece 2. In the given example, the injection molding pieces consist of tooth brush bodies, but it is clear that the invention is not restricted to the manufacturing of specific objects.

The device 1 from figures 1 to 7 mainly consists of a mold with at least three series of mold parts, a first series 6 with mold parts 7-8 respectively, a second series 9 with mold parts 10-11, and a third series 12 with mold parts 13-14, whereby every series has at least one first mold part, 15-16-17 respectively, which can form a wall for an accompanying first mold impression 18 when forming a first injection molding piece 2, as well as at least one second mold part, 19-20-21 respectively which can form a wall for an accompanying second mold impression 22 when forming a second injection molding piece 4.

In the given example, the respective mold parts are provided per series 6, 9 or 12 to one and the same mold block, or in one and the same mold frame, 23-24-25 respectively.

Further, the device 1 is provided with a motion mechanism 26 which makes it possible for the first series of mold parts 6 and the second series of mold parts 9 to alternately work in conjunction with the third series of mold parts 12. This motion mechanism 26 consists of a rotatable support 27 upon which the mold blocks or mold frames 23 and 24 are fixed. This support 27 can be rotated around an axis of rotation 28. To this end, this support 27 is mounted on a shaft 29 which can be rotated via a drive element 30 and a transmission 31, in this case in steps over 180 degrees.

The third series of mold parts 12, or thus the mold block 25, is erected in a fixed manner.

Further, the device 1 naturally also comprises means 32 for opening and closing the mold, which in this case consist of a pressure cylinder 33 which can provide a force via a press-on block 34 to push the mold block or frame 23 or 24 situated in front of it towards the mold block or frame 25, as well as to draw it away from the mold block or frame 25 via a non-represented connection while the mold is being opened. It is clear that the support 27 can hereby be moved over for example the shaft 29, but that it is provided upon it in such a manner that it cannot rotate.

In order to supply the aforesaid components 3 and 5, the device 1 is equipped with injection mold aggregates 35-36 for injecting the respective components 3-5 which can be connected to the mold impressions 18 and 22 via the necessary ducts.

Further, the device 1 comprises provisions 37 which make it possible, when the aforesaid mold parts are alternately presented to each other, to provide for a mutual repositioning of every first injection molding piece 2 concerned, such that this ends up in the accompanying second mold impression 22, so that the second component 5 can be injected upon it.

In the example from figures 1 to 7, these provisions consist of a transfer part 38 provided in each of the mold blocks 23 and 24 onto which the first injection molding pieces 2 end up being fixed during the injection.

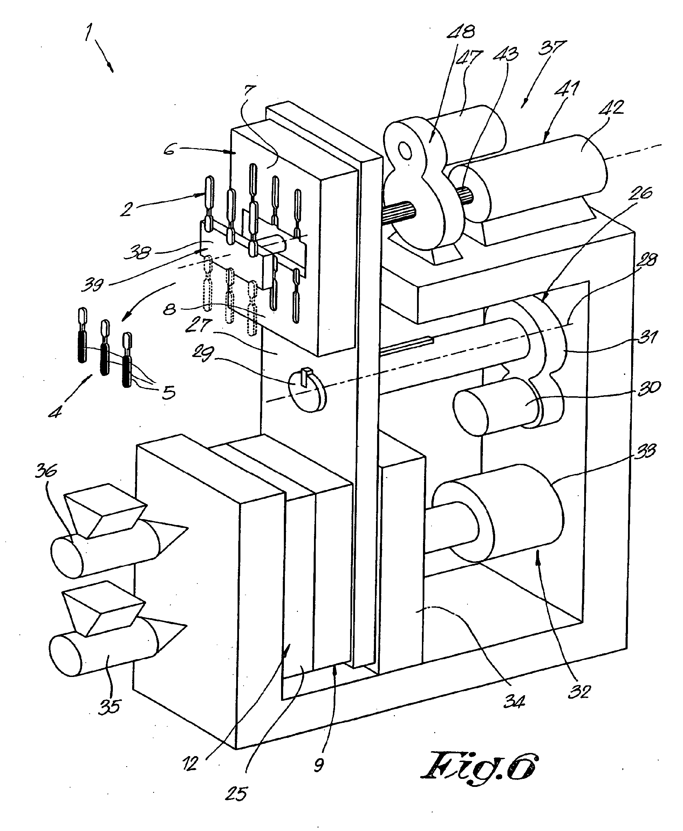

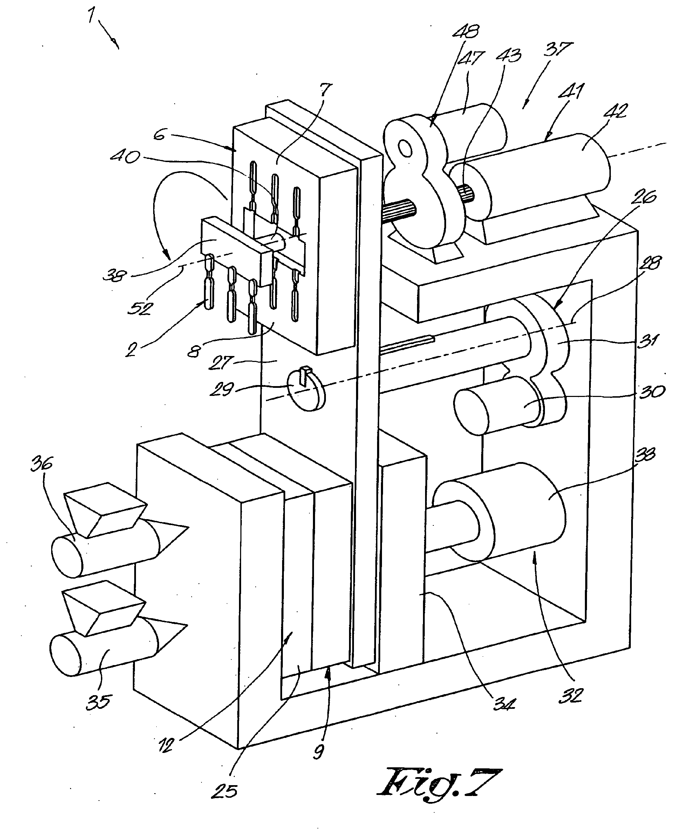

These transfer parts consist of insertion elements 39 which are retractable in the mold blocks or mold frames 23-24, which can be extended as well as rotated via a shaft 40, as is clearly indicated in figures 6 and 7.

In order to drive the transfer parts 38, the device 1 is equipped with an engageable drive mechanism 41, with a shaft 43 which can be axially moved by means of a piston 42 having a coupling element 44 which can mesh with a coupling element 45 at the far end 46 of the shaft 40, and with a motor 47 with which the shaft 43, and when coupled also the shaft 40, can be rotated via a transmission 48.

The working of the device 1 and the method of the invention applied thereby is mainly as described below.

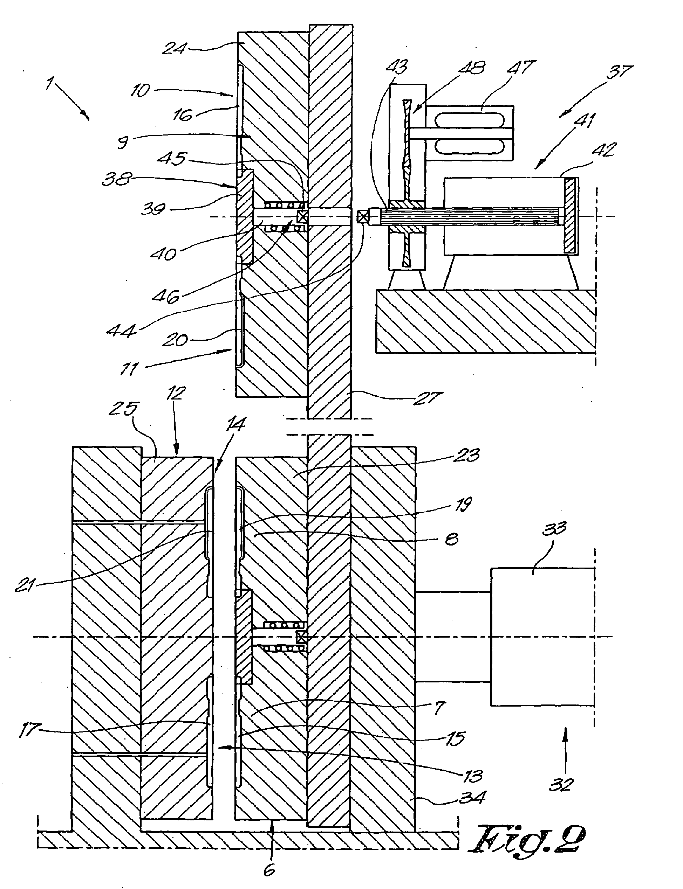

Figures 1 and 2 show the mold when opened.

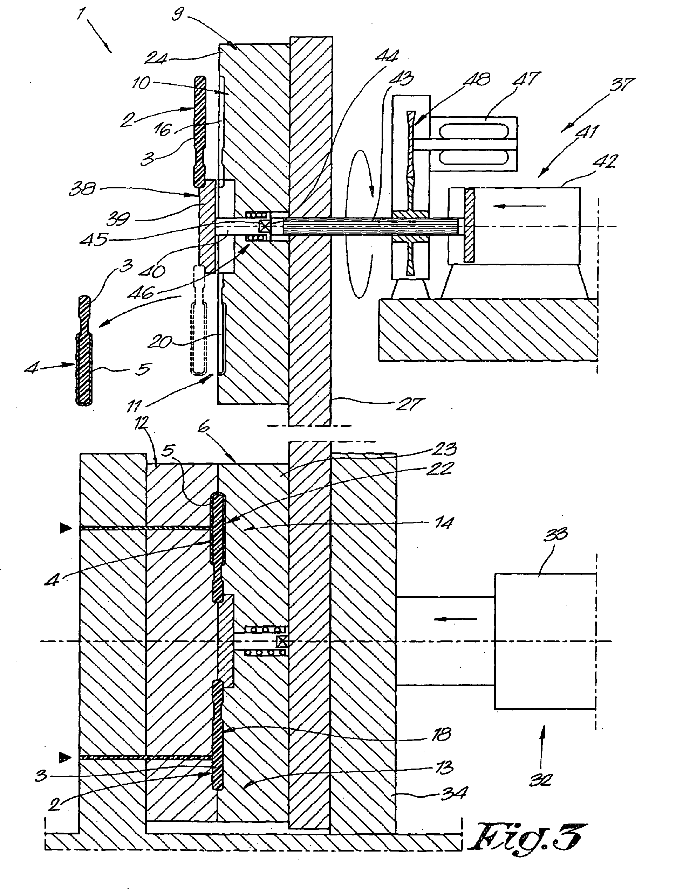

Figure 3 represents a condition whereby the mold is closed and the first series of mold parts 6 works in conjunction with the third series of mold parts 12. By injecting plastic, of the first component 3 as well as of the second component 5, a first injection molding piece 2 is formed at the bottom, and a second injection molding piece 4 at the top, as the second component 5 is injected on the first injection molding piece 2 which is already present in the second mold impression 22.

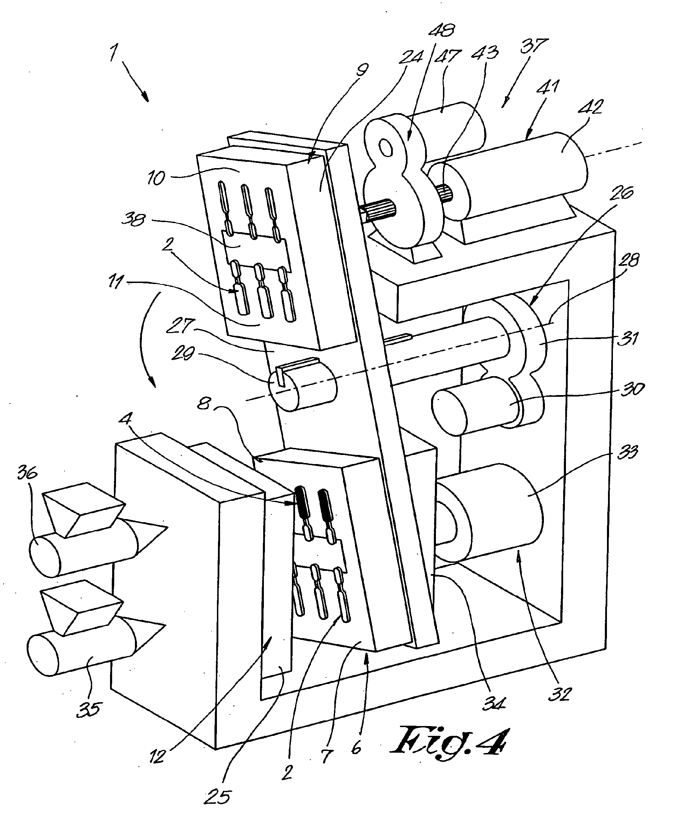

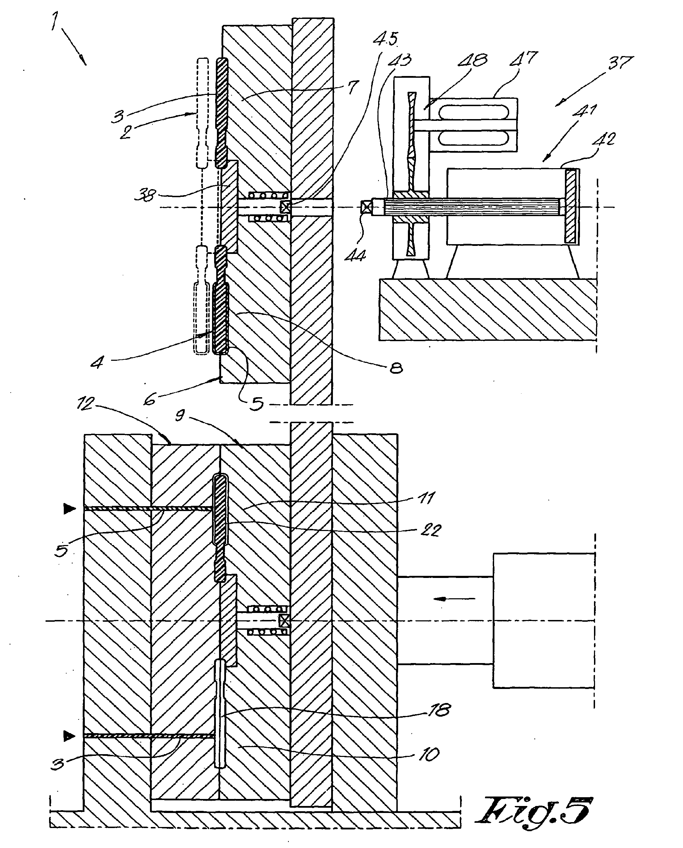

Following the injection molding cycle, the mold is opened and the positions of the series of mold parts 6 and 9 are changed by rotating the support 27, as represented in figure 4. After the mold has been rotated 180 degrees and after it has been sealed again, a situation as represented in figure 5 is created.

As of that moment on, it is possible to implement an injection molding cycle in the bottom part again, as was already represented in figure 3.

In the top part, the shaft 43 is extended by means of the piston 42 and it thus meshes through the support 27 with the shaft 40, as a result of which the insertion element 39 concerned is pushed outward, as represented in figure 3. At that time, or possibly even before, the finished injection molding pieces 4 are ejected in a manner which is not further described, which finally results in the condition from figure 6.

Next, the motor 47 is controlled such that the insertion element 39, as represented in figure 7, is rotated over 180 degrees. By subsequently drawing this insertion element in again and by rotating the support 27 back over 180 degrees, the first injection molding pieces 2 which are still present in the insertion element 39 will end up in the mold impression 22, where the second injection has to be realized.

It should be noted that the injection molding pieces can be ejected in different ways, either by pushing the injection molding pieces 4 loose by means of pins which are not represented or by means of the transfer part 38, or by removing them by means of a robot or the like.

It is clear that, in every injection molding cycle, one series of mold parts, either the series 6 or the series 9, is situated at the top as separated, whereby not only a good cooling of the injection molding pieces 2 is obtained, but also the position of these injection molding pieces 2 can be changed by means of the transfer part 38 concerned, while an injection molding cycle may be simultaneously implemented.

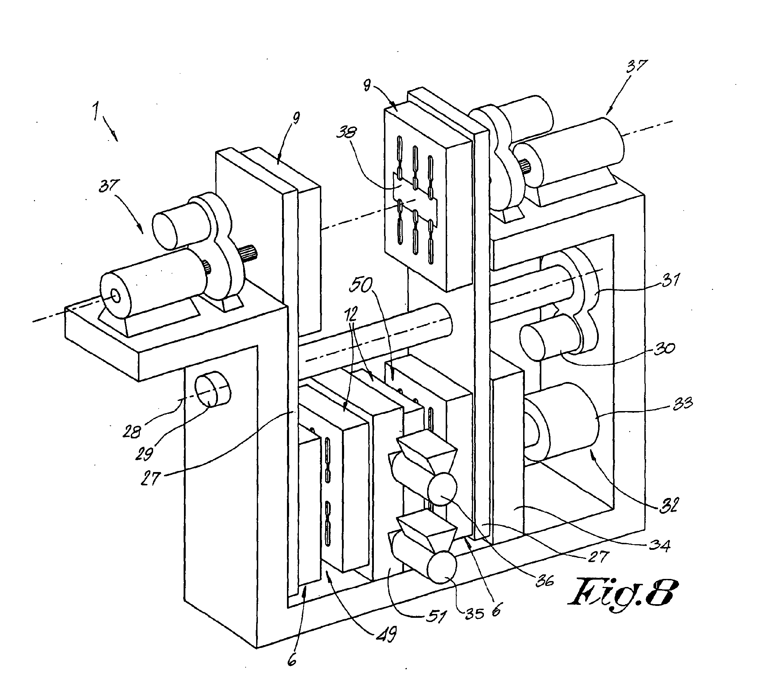

Figure 8 represents a device 1 according to the invention which is made in the shape of what is called a stack mold, with two sealing zones 49 and 50, whereby one common closing force is used for closing the mold at these sealing zones. This device 1 mainly consists of two groups of each time three series of mold parts 6-9-12 which are erected mirrorwise. As such, every group has the same construction as in the embodiment from figures 1 to 7, with this only difference that the mold blocks 25 are now mounted on a carriage 51. However, the working principle is similar as for figures 1 to 7.

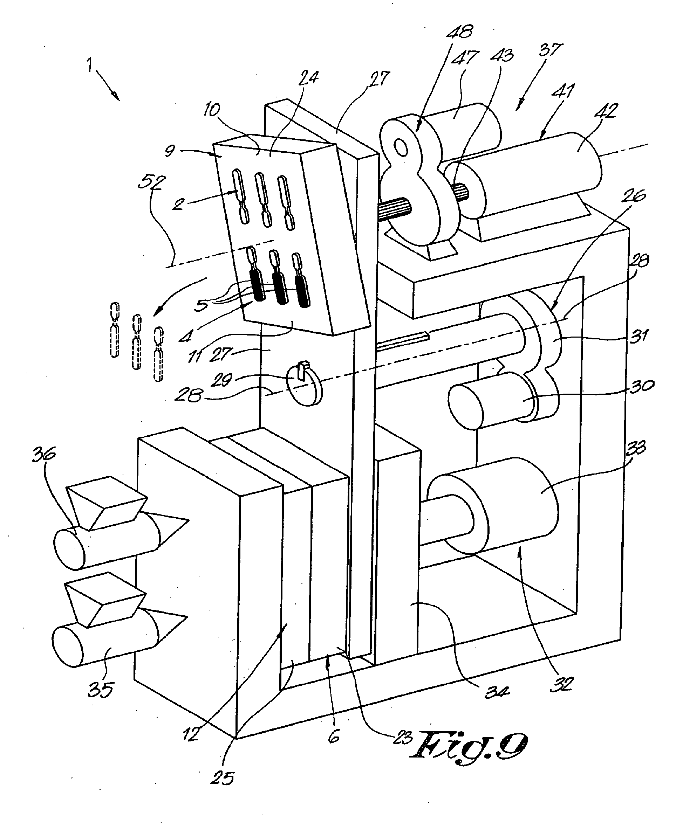

Figure 9 represents a variant of the embodiment from figure 1, whereby instead of transfer parts 38, use is made of series of mold parts, 6 and 9 respectively, whose position in relation to the support 27 upon which they are provided can be changed, in this case as the mold blocks 23-24 can be rotated around axes of rotation 52, which can also be realized in the given top position by means of the engageable drive mechanism 41.

The first injection molding pieces 2 which are thus formed in the lower part are not repositioned, but they remain in their position in the mold block concerned; however, as a result of the rotation around the shaft 52 concerned, they do end up in the right position afterwards for injecting the second component 5 upon them. However, it is clear that this embodiment is only suitable for applying plastic of the second component 5 on merely one side on the first injection molding pieces 2.

It should be noted that in the preceding embodiments, the third series of mold parts 12 and the first series 6 of mold parts or the second series 9 of mold parts working in conjunction with the latter during an injection molding cycle are concentrated in a single local sealing zone, in this case a rectangular zone, while the other series of mold parts which is then rotated outward clearly protrudes from the sealing zone. This offers the advantage that a good cooling is obtained and that the series of mold parts situated outside the sealing zone is easily accessible for all sorts of operations, such as for example carrying off the formed injection molding pieces.

The embodiments described by means of figures 1 to 9 are further characterized, as is visible, in that the mold parts co-operating during a mold injection cycle on the one hand, and the other protruding series of other mold parts, as mentioned above, are situated on top of each other, such that a slender construction is obtained with a relatively small machine width.

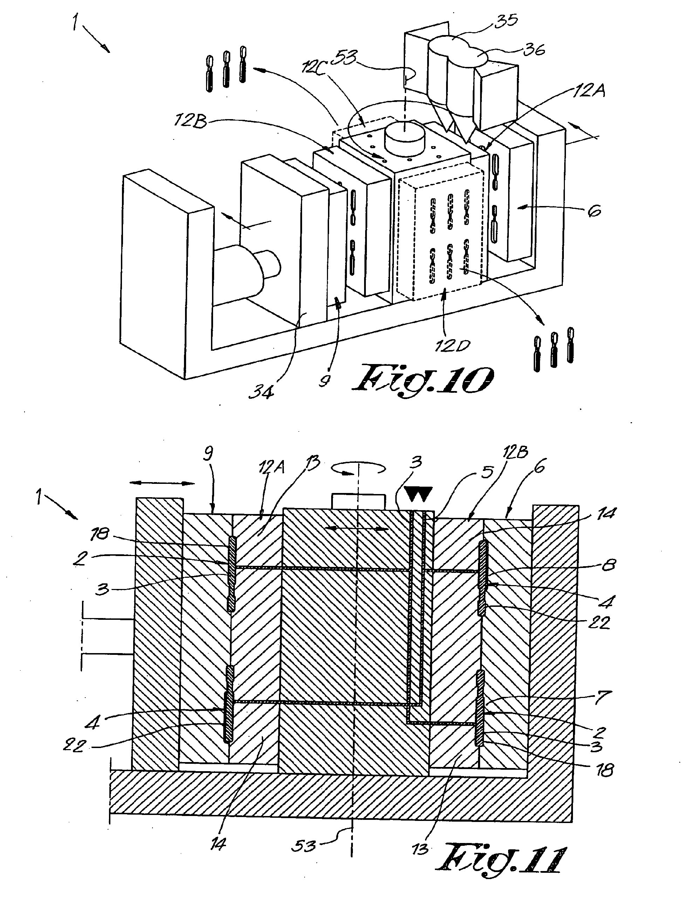

Figures 10 and 11 represent an embodiment in which the device 1 is also made in the shape of a stack mold. The first series of mold parts 6 and the second series of mold parts 9 are hereby situated with their land areas towards one another, but they are positioned such that the mold parts 7-8 and 10-11 take up opposite positions. By this is meant that the mold part 7 for forming the first series of injection molding pieces 2 is situated at the bottom in the mold block 23, and the mold part 8 is situated at the top, whereas, on the mold block 24, the mold part 10 for forming the first injection molding pieces 2 is situated at the top and the mold part 11 at the bottom.

The third series of mold parts, which in this case is indicated with reference 12A, can be rotated between the first series 6 and the second series 9, along an axis of rotation 53 extending diagonally to the closing direction of the mold.

Further, the third series of mold parts is split, such that two `third series' are created, the second of which is indicated with 12B, such that when the mold parts close at every injection molding cycle, a third series 12A or 12B co-operates with the first series 6, just as another third series 12B or 12A co-operates with the second series 9.

The mold parts of every third series, 12A and 12B respectively, are made such that the injection molding pieces 2 and 4, after the mold has been opened, remain present on these molds parts.

The working of the device 1 can be easily derived from the figures 10 and 11. As the mold parts of the series 6 and 9 have been erected exactly the other way around, it is clear that, when a first injection molding piece 2 is formed on the first series 6 and the second series 9 is formed, said injection molding piece 2, after the series 12A-12B have been rotated around the axis of rotation 53, over 180 degrees, automatically ends up in the second mold impressions 22 where the second plastic component 5 is supplied. It should be noted that, in the right upper half of figure 11 and the left lower half, the supplies for the second plastic component 5 are only represented schematically, and that in reality, they taper such that they open into the cavity provided between the already formed injection molding piece 2 and the mold parts 6 and 9.

Between every rotation, the formed second injection molding pieces 4 are ejected out of the mold.

Also two additional series 12C and 12D could be provided, and the rotation could for example be carried out over each time 90 degrees. This offers the advantage that, while an injection molding cycle is being implemented on two series of mold parts, for example 12A and 12B, the other two series of mold parts, i.e. 12C and 12D, are then directed outward, so that the injection molding pieces 2 at these outwardly directed series are cooled in the ambient air, and moreover there is more time available to eject the formed injection molding pieces 4.

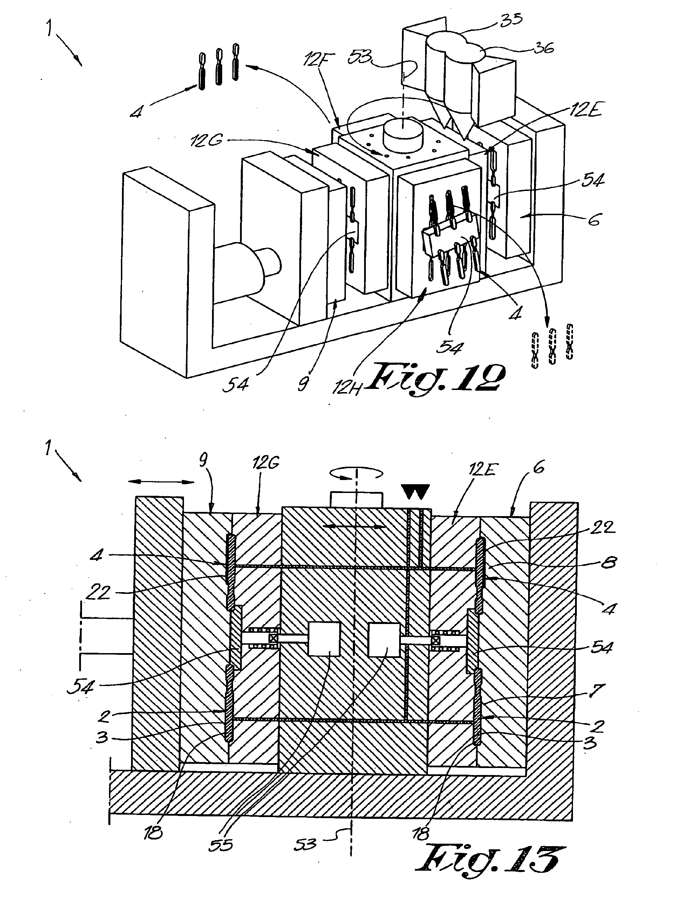

Figures 12 and 13 represent a variant with four series of 'third' mold parts 12E-12F-12G-12H, which are rotated over 90 degrees between every injection molding cycle, whereby the first injection molding pieces 2 can be repositioned by means of transfer parts 54 analogous to the transfer parts 38. In this case, the mold parts of the series 6 and 9 do no longer have to be positioned upside down in relation to each other. It is clear that the transfer parts 54 can be controlled by means of suitable drive means 55.

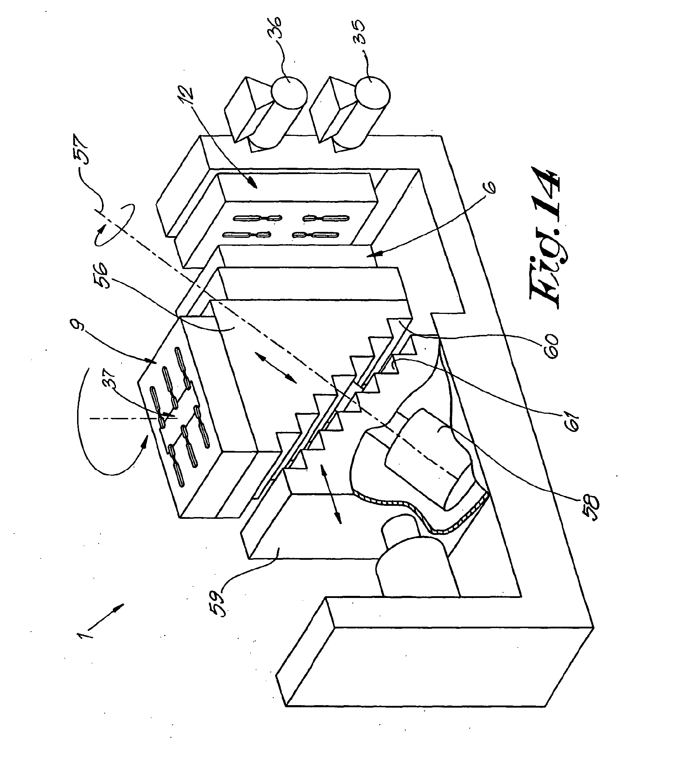

Figure 14 represents a special embodiment whereby the device 1 comprises a first series of mold parts 6 and a second series of mold parts 9 provided on a common supporting structure 56, whereby these series of mold parts 6 and 9, from a general point of view, are mutually situated at an angle with their land areas, and whereby the first series 6 and the second series 9 can alternately be placed opposite to the third series 12 by rotating the supporting structure 56 around an axis of rotation 57 which extends according to the bisector between the aforesaid two land areas. By realizing a rotation over each time 180 degrees with suitable drive means 58, also the first series 6 and the second series 9 can thus be alternately presented to the third series 12.

The means 32 for opening and closing the mold consist of a pressure cylinder co-operating with the supporting structure 56, via an intermediate structure 59. The supporting structure 56 and the intermediate structure 59 have stepped contact surfaces 60 and 61 which can co-operate with each other, in the one position as well as in the other position of the supporting structure 56, so that the pressure force of the means 32 can be transmitted directly to the co-operating series of mold parts.

As the supporting structure 56 is rotated, it is moved away somewhat from the intermediate structure 59, as represented in figure 14, so that the stepped contact surfaces 60-61 are detached from one another and a rotation becomes possible. While the mold is being closed, the stepped contact surfaces 60 and 61 make contact and the pressure force can always be transmitted in the right direction.

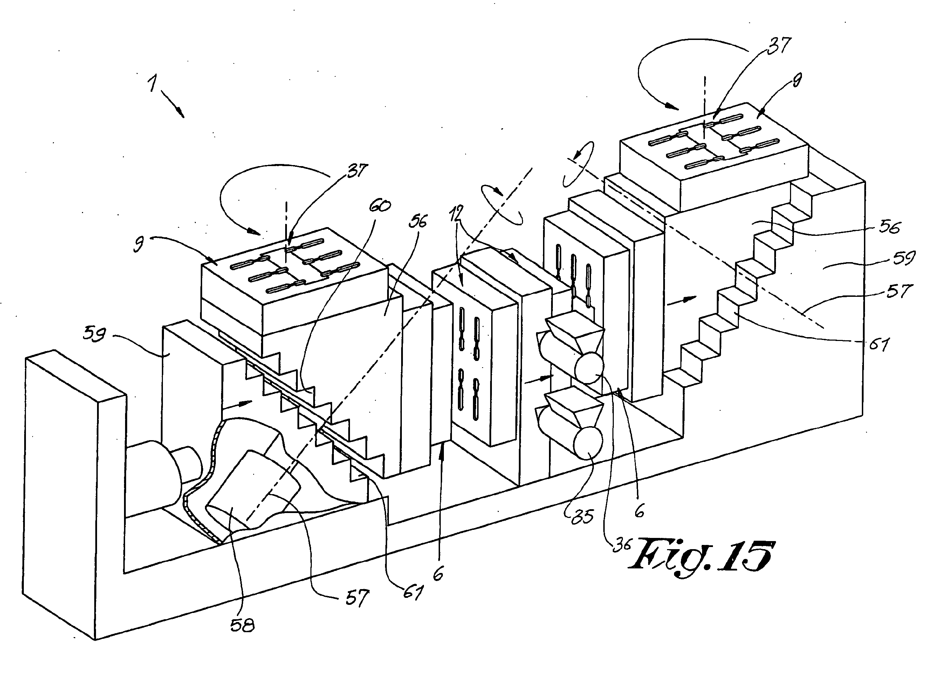

Figure 15 represents a variant whereby the device 1 consists of a stack mold applying the principle of the embodiment from figure 14 twice, but whereby also the middle series of mold parts 12 are of course provided on a carriage 62.

Figures 16 to 18 represent a variant in the shape of a stack mold, whereby the series of mold parts 6 and 9 can perform a translation movement T at every stack, such by means of drive means which are not represented. Thanks to this translation movement T, the series 6 and 9 can then be alternately positioned opposite to the series 12 per stack. The translation movement T is in this case a horizontal shift, but according to a variant this would also be possible in the vertical or another direction.

The working of this embodiment can be easily derived from the different stages represented in figures 16 to 19.

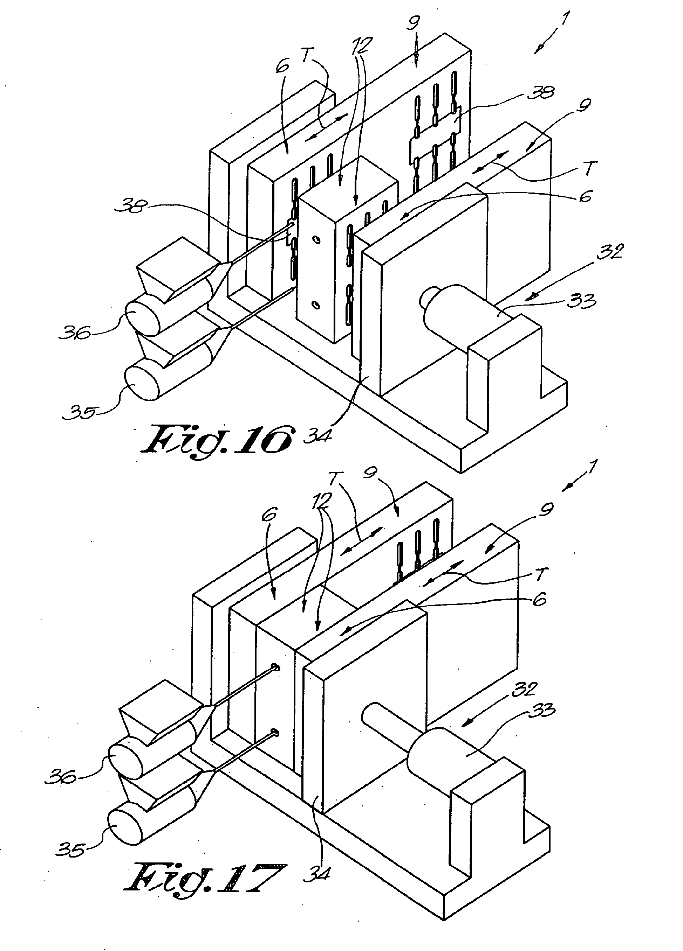

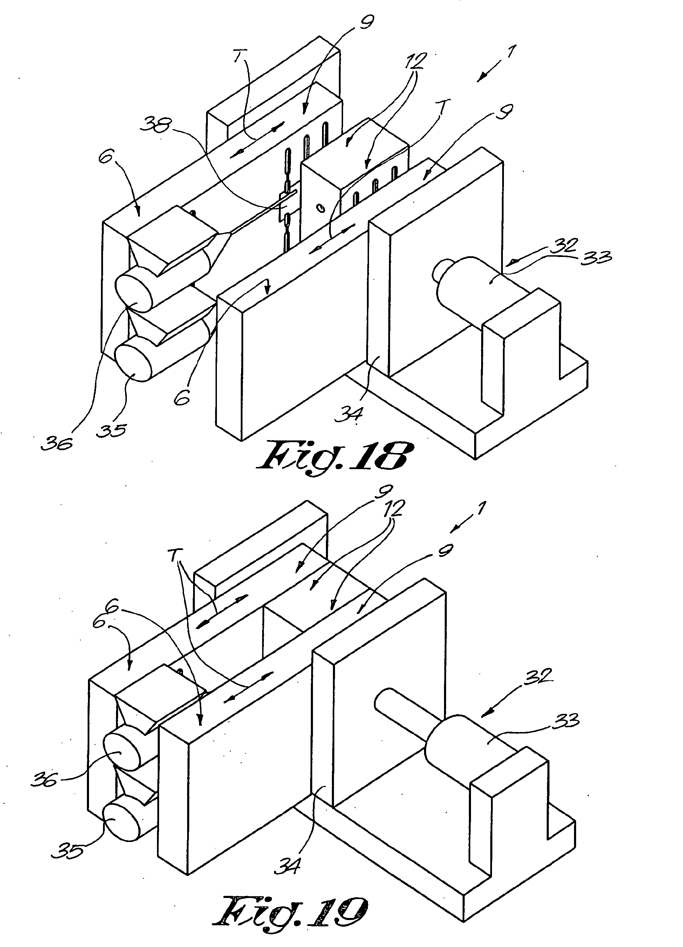

Figure 16 shows an opened position, whereas figure 17 represents the same position, but closed. Figure 18 also shows an opened position, but after the series 6-9 have carried out a translation movement T, whereas figure 19 represents the corresponding closed position.

It is clear that the principle of mold parts which are horizontally slidable, represented here for a stack mold, can be applied just as well to a simple embodiment. It is also clear that, according to a variant, the series 6 and 9 can be fixed, whereas the series 12 can be shifted by means of a translation movement. In figures 16 to 19, use is also made of a transfer part 38, but according to a variant it would also be possible without such a transfer part 38.

The invention is by no means limited to the above-described embodiments given as an example and represented in the accompanying drawings; on the contrary, such a method and device for manufacturing injection molding pieces can be made in all sorts of shapes and dimensions while still remaining within the scope of the invention as defined in the claims.

Thus, for example, instead of transfer parts, use can also be made of a robot which is either or not external in order to move the injection molding pieces 2. The latter can possibly also carry off the injection molding pieces 4.

The mold parts of one and the same series 6, 9 or 12 do not have to belong to one and the same mold block or mold frame 23, 24 or 25. Such a series may also consist of separate mold parts. Thus, for example, the mold frames or mold blocks 23 and 24 in figure 9 can each be replaced by two separate mold parts 7 and 8, 10 and 11 respectively. The mold parts 7 and 8 can thereby be provided to the support 27 such that they can rotate separately. The same also applies then for the mold parts 10 and 11.

Depending on the embodiment, the injection molding aggregates 35-36 can be provided in different places, whereby they either or not work in conjunction with movable mold parts, and whereby they are either or not made such that they move along with such mold parts. They can also be provided on separate carriages and thus move along with the moving mold parts while the mold is being opened and closed.

'Alternately' presenting certain mold parts 6-19-12 to each other according to the invention does not exclude, however, that this is done in an irregular way. Nor is it excluded to provide all sorts of intermediate steps, for example for realizing a cooling.

The invention could also be used for manufacturing injection molding pieces with more than two components. The components do not have to be made of different plastics.

In the case of for example three components, every series 6, 9, 12 will preferably have each time three mold parts. In this case, it is also advantageous to work with angular rotations in steps of 120 degrees.

## Claims

1. Method for manufacturing injection molding pieces consisting of at least two components (3-5) whereby a first injection molding piece (2) is formed of a first component (3) in a first mold impression (18) and a second injection molding piece (4) is formed by putting the first injection molding piece (2) in a second mold impression (22), and by providing a second component (5) on the first injection molding piece (2), a mold with at least three series of mold parts being used, namely a first series (6), a second series (9) and a third series (12) respectively, whereby the first series (6) of mold parts (7-8) and the second series (9) of mold parts (10-11) alternately work in conjunction with the third series (12) of mold parts (13-14) in order to inject at least one first injection molding piece (2) as well as one second injection molding piece (4) in the mold impressions (18-22) formed thereby, **characterized in that** every series of mold parts has at least one first mold part (15,16,17) which can form a wall for the first mold impression (18) when forming a first injection molding piece (2), as well as at least one second mold part (19,20,21) which can form a wall for the second mold impression (22) when forming a second injection molding piece (4) and **in that** during the alternating presentation, a mutual repositioning of every first injection molding piece (2) concerned is obtained, such that it ends up in the accompanying second mold impression (22).

2. Method according to claim 1, **characterized in that** the aforesaid repositioning is realized by changing the places of the first injection molding pieces (2) after their production by removing them from a mold part with which they have been made into the other mold part which is part of the same series.

3. Method according to claim 2, **characterized in that** the first injection molding pieces (2) are moved by means of a transfer part (38-54) which is active between the mold parts (7-8, 10-11, 13-14) of the series (6-9-12) concerned or by means of a robot.

4. Method according to claim 1, **characterized in that** the aforesaid repositioning is realized by leaving the first mold injection pieces (2), after their production, when opening the mold, on the mold part (7) of the first series (6) in which they have been made, on the mold part (10) of the second series (9) in which they have been made respectively, and by making sure that, at the next cooperation of the first series (6) with the third series (12), of the second series (9) with the third series (12) respectively, the mutual position of the mold parts (7-8) of the first series (6) in relation to the third series (12), of the mold parts (10-11) of the second series (9) in relation to the mold,parts (13-14) of the third series (12) respectively, is changed.

5. Method according to claim 4, **characterized in that** the mutual position is changed by subjecting one or several of the aforesaid series (6-9) of mold parts to a rotation, in particular in relation to a support (27) upon which they have been provided.

6. Method according to claim 1, **characterized in that** the aforesaid repositioning is realized by leaving the first injection molding pieces (2), after their making, when opening the mold on the mold part (13) concerned of the third series (12), and by making use of a first series (6) and a second series (9) whose mold parts (7-8, 10-11 respectively) assume opposite positions.

7. Method according to any of the preceding claims, **characterized in that** the first series of mold parts (6) and the second series of mold parts (9) preferably alternately co-operate with the third series of mold parts (12) by making the first and second series (6-9) on the one hand, and the third series (12) on the other hand carry out a mutual rotational movement.

8. Method according to claim 7, **characterized in that** the aforesaid rotational movement is realized around an axis of rotation (28) which is parallel to the closing direction of the mold parts concerned.

9. Method according to claim 8, **characterized in that** the third series of mold parts (12) is erected such that it cannot rotate, and **in that** the first series (6) and the second series (9) are rotated around an axis of rotation (28) situated outside the third series (12).

10. Method according to claim 7, **characterized in that** use is made of a first series of mold parts (6) and a second series of mold parts (9) provided on a common supporting structure (56), whereby, from a general point of view, they are mutually situated at an angle with their land areas, and whereby the first series of mold parts (6) and the second series of mold parts (9) can alternately be placed opposite to the third series of mold parts (12) by rotating the aforesaid supporting structure (56) around an axis of rotation (57) which extends according to the bisector between the aforesaid two land areas.

11. Method according to claim 7, **characterized in that** the third series of mold parts (12A-12B-12C-12D, 12E-12F-12G-12H), in order to make them alternately work in conjunction with the first series (6) and the second series (9), is rotated between the first series (6) and the second series (9).

12. Method according to claim 7 or 11, **characterized in that** the first series of mold parts (6) and the second series of mold parts (9) are directed towards one another with their land areas, and **in that** the third series of mold parts (12A-12B-12C-12D, 12E-12F-12G-12H) is rotated in between along an axis of rotation (53) extending diagonally to the closing direction of the mold.

13. Method according to claim 11 or 12, **characterized in that** use is made of a third series of mold parts (12A-12B-12C-12D, 12E-12F-12G-12H) which is at least split, such that two or more third series are created, such that when the mold parts close at every injection molding cycle, a third series co-operates with the first series (6), just as another third series co-operates with the second series (9).

14. Method according to any of the preceding claims, **characterized in that** while the mold is being closed, at least one series of mold parts (6-9, 12A-12B-12C-12D, 12E-12F-12G-12H) is kept outside the injection molding cycle.

15. Method according to claim 14, **characterized in that** at the series of mold parts (6-9, 12A-12B-12C-12D, 12E-12F-12G-12H) which is kept outside the injection molding cycle, at least a repositioning as mentioned above is realized.

16. Method according to any of claims 1 to 6, **characterized in that** the first series of mold parts (6) and the second series of mold parts (9) alternately work in conjunction with the third series of mold parts (12) by making the first and the second series (6-9) on the one hand and the third series (12) on the other hand alternately carry out a translation movement (T).

17. Device for manufacturing injection molding pieces, in particular according to the method of one of the preceding claims, mainly consisting of a mold with at least three series of mold parts, a first series (6), a second series (9) and a third series (12, 12A-12B-12C-12D, 12E-12F-12G-12H) respectively, one or several motion mechanisms (26) which make it possible for the first series of mold parts (6) and the second series of mold parts (9) to alternately work in conjunction with the third series of mold parts (12) in order to inject at least one first injection molding piece (2) as well as at least one second injection molding piece (4) in the mold impression formed thereby, means (32) for opening and closing the mold and injection molding aggregates (35,36) for injecting the respective components (3,5), **characterized in that** every series of mold parts has at least one first mold part (15,16,17) which can form a wall for the first mold impression (18) when forming a first injection molding piece (2), as well as at least one second mold part (19,20,21) which can form a wall for the second mold impression (22) when forming a second injection molding piece (4) and **in that** it also comprises provisions (37) which make it possible, when the aforesaid mold parts are alternately presented to one another, to provide for a mutual repositioning of every first injection molding piece (2) concerned, such that it ends up in the accompanying second mold impression (22).

18. Device according to claim 17, **characterized in that** the mold parts (7-8, 10-11, 13-14) of the same series (6-9-12) are formed as a whole, in other words as one and the same mold block (23-24-25) or in one and the same mold frame.

19. Device according to claim 17 or 18, **characterized in that** the mold is made as a stack mold.

20. Device according to any of claims 17 to 19, **characterized in that** the third series of mold parts (12), and a first series of mold parts (6) or a second series of mold parts (9) working in conjunction therewith during an injection molding cycle are concentrated in a single local sealing zone, preferably a rectangular zone, while the other series of mold parts, i.e. the second series of mold parts (9) or the first series of mold parts (6), then protrudes from said sealing zone.

21. Device according to claim 20, **characterized in that** the series of mold parts working together during an injection molding cycle on the one hand, and the other aforesaid protruding other series of mold parts as mentioned above are situated on top of each other.

22. Device according to claim 17, **characterized in that** it comprises mold parts which can be moved, as described in any of claims 1 to 15, whereby this device (1) is further provided with means for moving the mold parts as such.

## Patentansprüche

1. Verfahren zur Herstellung von aus mindestens zwei Komponenten (3-5) bestehenden Spritzgussteilen, wobei ein erstes Spritzgussteil (2) aus einer ersten Komponente (3) in einem ersten Formwerkzeughohlraum (18) geformt wird und ein zweites Spritzgussteil (4) geformt wird, indem das erste Spritzgussteil (2) in einen zweiten Formwerkzeughohlraum (22) gebracht wird und indem eine zweite Komponente (5) auf dem ersten Spritzgussteil (2) angebracht wird, wobei ein Formwerkzeug mit mindestens drei Serien von Formwerkzeugteilen verwendet wird, nämlich einer ersten Serie (6), einer zweiten Serie (9) beziehungsweise einer dritten Serie (12), wobei die erste Serie (6) von Formwerkzeugteilen (7-8) und die zweite Serie (9) von Formwerkzeugteilen (10-11) abwechselnd mit der dritten Serie (12) von Formwerkzeugteilen (13-14) zusammenwirkt, um mindestens ein erstes Spritzgussteil (2) sowie ein zweites Spritzgussteil (4) in die **dadurch** gebildeten Formwerkzeughohlräume (18-22) einzuspritzen, **dadurch gekennzeichnet, dass** jede Serie von Formwerkzeugteilen mindestens ein erstes Formwerkzeugteil (15,16,17) aufweist, das eine Wand für den ersten Formwerkzeughohlraum (18) bilden kann, wenn ein erstes Spritzgussteil (2) geformt wird, sowie mindestens ein zweites Formwerkzeugteil (19,20,21), das eine Wand für den zweiten Formwerkzeughohlraum (22) bilden kann, wenn ein zweites Spritzgussteil (4) geformt wird, und dass bei dem abwechselnden Präsentieren eine gegenseitige Umpositionierung jedes betreffenden ersten Spritzgussteils (2) erhalten wird, sodass es in den begleitenden zweiten Formwerkzeughohlraum (22) gelangt.

2. Verfahren gemäß Anspruch 1, **dadurch gekennzeichnet, dass** die vorgenannte Umpositionierung verwirklicht wird, indem die Plätze der ersten Spritzgussteile (2) nach ihrer Herstellung vertauscht werden, indem sie aus einem Formwerkzeugteil, womit sie gemacht wurden, in das andere Formwerkzeugteil verlegt werden, das Teil derselben Serie ist.

3. Verfahren gemäß Anspruch 2, **dadurch gekennzeichnet, dass** die ersten Spritzgussteile (2) mittels eines Transferteils (38-54), das zwischen den Formwerkzeugteilen (7-8, 10-11, 13-14) der betreffenden Serien (6-9-12) aktiv ist, oder mittels eines Roboters bewegt werden.

4. Verfahren gemäß Anspruch 1, **dadurch gekennzeichnet, dass** die vorgenannte Umpositionierung verwirklicht wird, indem die ersten Spritzgussteile (2) nach ihrer Herstellung, beim Öffnen des Formwerkzeugs, an dem Formwerkzeugteil (7) der ersten Serie (6), worin sie hergestellt wurden, beziehungsweise an dem Formwerkzeugteil (10) der zweiten Serie (9), worin sie hergestellt wurden, belassen werden, und indem sichergestellt wird, dass beim nächsten Zusammenwirken der ersten Serie (6) mit der dritten Serie (12) beziehungsweise der zweiten Serie (9) mit der dritten Serie (12) die gegenseitige Position der Formwerkzeugteile (7-8) der ersten Serie (6) in Hinsicht auf die dritte Serie (12) beziehungsweise der Formwerkzeugteile (10-11) der zweiten Serie (9) in Hinsicht auf die Formwerkzeugteile (13-14) der dritten Serie (12) verändert wird.

5. Verfahren gemäß Anspruch 4, **dadurch gekennzeichnet, dass** die gegenseitige Position **dadurch** verändert wird, dass eine oder mehrere der vorgenannten Serien (6-9) von Formwerkzeugteilen einer Drehbewegung, insbesondere in Bezug auf eine Stütze (27), worauf sie angebracht sind, unterzogen werden.

6. Verfahren gemäß Anspruch 1, **dadurch gekennzeichnet, dass** die vorgenannte Umpositionierung verwirklicht wird, indem die ersten Spritzgussteile (2) nach ihrer Herstellung beim Öffnen des Formwerkzeugs an dem betreffenden Formwerkzeugteil (13) der dritten Serie (12) belassen werden, und indem von einer ersten Serie (6) und einer zweiten Serie (9) Gebrauch gemacht wird, deren Formwerkzeugteile (7-8 beziehungsweise 10-11) entgegengesetzte Positionen einnehmen.

7. Verfahren gemäß einem der vorgenannten Ansprüche, **dadurch gekennzeichnet, dass** die erste Serie von Formwerkzeugteilen (6) und die zweite Serie von Formwerkzeugteilen (9) bevorzugt abwechselnd mit der dritten Serie von Formwerkzeugteilen (12) zusammenwirken, indem man die erste und zweite Serie (6-9) einerseits und die dritte Serie (12) andererseits eine gegenseitige Rotationsbewegung ausführen lässt.

8. Verfahren gemäß Anspruch 7, **dadurch gekennzeichnet, dass** besagte Rotationsbewegung um eine Rotationsachse (28) verwirklicht wird, die parallel zur Schließrichtung der betreffenden Formwerkzeugteile ist.

9. Verfahren gemäß Anspruch 8, **dadurch gekennzeichnet, dass** die dritte Serie von Formwerkzeugteilen (12) so aufgestellt ist, dass sie nicht rotieren kann, und dass die erste Serie (6) und die zweite Serie (9) um eine Rotationsachse (28) rotiert werden, die sich außerhalb der dritten Serie (12) befindet.

10. Verfahren gemäß Anspruch 7, **dadurch gekennzeichnet, dass** eine erste Serie von Formwerkzeugteilen (6) und eine zweite Serie von Formwerkzeugteilen (9), die auf einer gemeinsamen Tragstruktur (56) angebracht sind, verwendet werden, wobei, von einem generellen Gesichtspunkt aus, sie sich in Bezug zueinander mit ihren Schließflächen unter einem Winkel befinden, und wobei die erste Serie von Formwerkzeugteilen (6) und die zweite Serie von Formwerkzeugteilen (9) abwechselnd gegenüber der dritten Serie von Formwerkzeugteilen (12) plaziert werden können, indem die vorgenannte Tragstruktur (56) um eine Rotationsachse (57) gedreht wird, die sich gemäß der Winkelhalbierenden zwischen den besagten beiden Schließflächen erstreckt.

11. Verfahren gemäß Anspruch 7, **dadurch gekennzeichnet, dass** die dritte Serie von Formwerkzeugteilen (12A-12B-12C-12D, 12D-12F-12G-12H), um sie abwechselnd mit der ersten Serie (6) und der zweiten Serie (9) zusammenwirken zu lassen, zwischen der ersten Serie (6) und der zweiten Serie (9) rotiert wird.

12. Verfahren gemäß Anspruch 7 oder 11, **dadurch gekennzeichnet, dass** die erste Serie von Formwerkzeugteilen (6) und die zweite Serie von Formwerkzeugteilen (9) mit ihren Schließflächen zueinander gerichtet sind, und dass die dritte Serie von Formwerkzeugteilen (12A-12B-12C-12D, 12E-12F-12G-12H) dazwischen entlang einer Rotationsachse (53) rotiert wird, die sich diagonal zur Schließrichtung des Formwerkzeugs erstreckt.

13. Verfahren gemäß Anspruch 11 oder 12, **dadurch gekennzeichnet, dass** eine dritte Serie von Formwerkzeugteilen (12A-12B-12C-12D, 12E-12F-12G-12H) verwendet wird, die mindestens geteilt ist, sodass zwei oder mehr dritte Serien erzeugt werden, sodass, wenn die Formwerkzeugteile sich bei jedem Spritzgusszyklus schließen, eine dritte Serie mit der ersten Serie (6) zusammenwirkt, sowie eine andere dritte Serie mit der zweiten Serie (9) zusammenwirkt.

14. Verfahren gemäß einem der vorgenannten Ansprüche, **dadurch gekennzeichnet, dass**, während das Formwerkzeug geschlossen wird, mindestens eine Serie von Formwerkzeugteilen (6-9, 12A-12B-12C-12D, 12E-12F-12G-12H) außerhalb des Spritzgusszyklus gehalten wird.

15. Verfahren gemäß Anspruch 14, **dadurch gekennzeichnet, dass** an der Serie von Formwerkzeugteilen (6-9, 12A-12B-12C-12D, 12E-12F-12G-12H), die außerhalb des Spritzgusszyklus gehalten wird, mindestens eine Umpositionierung, wie oben erwähnt, vorgenommen wird.

16. Verfahren gemäß einem der Ansprüche 1 bis 6, **dadurch gekennzeichnet, dass** die erste Serie von Formwerkzeugteilen (6) und die zweite Serie von Formwerkzeugteilen (9) abwechselnd mit der dritten Serie von Formwerkzeugteilen (12) zusammenwirken, indem man die erste und die zweite Serie (6-9) einerseits und die dritte Serie (12) andererseits abwechselnd eine Translationsbewegung (T) ausführen lässt.

17. Vorrichtung zur Herstellung von Spritzgussteilen, insbesondere gemäß dem Verfahren eines der vorgenannten Ansprüche, im Wesentlichen bestehend aus einem Formwerkzeug mit drei Serien von Formwerkzeugteilen, einer ersten Serie (6), einer zweiten Serie (9) beziehungsweise einer dritten Serie (12, 12A-12B-12C-12D, 12E-12F-12G-12H), einem oder mehreren Bewegungsmechanismen (26), die ermöglichen, dass die erste Serie von Formwerkzeugteilen (6) und die zweite Serie von Formwerkzeugteilen (9) abwechselnd mit der dritten Serie von Formwerkzeugteilen (12) zusammenwirken, um mindestens ein erstes Spritzgussteil (2) sowie mindestens ein zweites Spritzgussteil (4) in den **dadurch** gebildeten Formwerkzeughohlraum einzuspritzen, Mitteln (32) zum Öffnen und Schließen des Formwerkzeugs, und Spritzgussaggregaten (35,36) zum Einspritzen der betreffenden Komponenten (3,5), **dadurch gekennzeichnet, dass** jede Serie von Formwerkzeugteilen mindestens ein erstes Formwerkzeugteil (15,16,17) aufweist, das eine Wand für den ersten Formwerkzeughohlraum (18) bilden kann, wenn ein erstes Spritzgussteil (2) geformt wird, sowie mindestens ein zweites Formwerkzeugteil (19,20,21), das eine Wand für den zweiten Formwerkzeughohlraum (22) bilden kann, wenn ein zweites Spritzgussteil (4) geformt wird, und dass sie auch Einrichtungen (37) umfasst, die es ermöglichen, dass bei dem abwechselnden Präsentieren eine gegenseitige Umpositionierung jedes betreffenden ersten Spritzgussteils (2) erhalten wird, sodass es in den begleitenden zweiten Formwerkzeughohlraum (22) gelangt.

18. Vorrichtung gemäß Anspruch 17, **dadurch gekennzeichnet, dass** die Formwerkzeugteile (7-8, 10-11, 13-14) derselben Serie (6-9-12) als Ganzes geformt sind, mit anderen Worten, als ein und derselbe Formwerkzeugblock (23-24-25) oder in ein und demselben Formwerkzeugrahmen.

19. Vorrichtung gemäß Anspruch 17 oder 18, **dadurch gekennzeichnet, dass** das Formwerkzeug als Stapelformwerkzeug ausgeführt ist.

20. Vorrichtung gemäß einem der Ansprüche 17 bis 19, **dadurch gekennzeichnet, dass** die dritte Serie von Formwerkzeugteilen (12) und eine erste Serie von Formwerkzeugteilen (6) oder eine während eines Spritzgusszyklus damit zusammenwirkende zweite Serie von Formwerkzeugteilen (9) in einer einzigen örtlichen Schließzone konzentriert sind, bevorzugt einer rechteckigen Zone, während die anderen Serie von Formwerkzeugteilen, d.h. die zweite Serie von Formwerkzeugteilen (9) oder die erste Serie von Formwerkzeugteilen (6), dann aus besagter Schließzone ragt.

21. Vorrichtung gemäß Anspruch 20, **dadurch gekennzeichnet, dass** die während eines Spritzgusszyklus zusammenwirkenden Serien von Formwerkzeugteilen einerseits und die übrige vorgenannte vorragende andere Serie von Formwerkzeugteilen, wie vorgenannt, übereinander angeordnet sind.

22. Vorrichtung gemäß Anspruch 17, **dadurch gekennzeichnet, dass** sie Formwerkzeugteile umfasst, die bewegt werden können, wie in einem der Ansprüche 1 bis 15 beschrieben, wobei diese Vorrichtung (1) weiter mit Mitteln zum Bewegen der Formwerkzeugteile als solche versehen ist.

## Revendications

1. Procédé pour la fabrication de pièces de moulage par injection constituées par au moins deux composants (3-5), par lequel on forme une première pièce de moulage par injection (2) constituée d'un premier composant (3) dans une première empreinte de moulage (18) et on forme une deuxième pièce de moulage par injection (4) en plaçant la première pièce de moulage par injection (2) dans une deuxième empreinte de moulage (22), et en disposant un deuxième composant (5) sur la première pièce de moulage par injection (2), un moule possédant au moins trois séries de parties de moule étant utilisé, plus précisément une première série (6), une deuxième série (9) et une troisième série (12), respectivement, la première série (6) de parties de moule (7-8) et la deuxième série (9) de parties de moule (10-11) travaillant en alternance de manière conjointe avec la troisième série (12) de parties de moule (13-14) dans le but d'injecter au moins une première pièce de moulage par injection (2) ainsi qu'une deuxième pièce de moulage par injection (4) dans les empreintes de moulage (18-22) ainsi obtenues, **caractérisé en ce que** chaque série de parties de moule possède au moins une première partie de moule (15, 16, 17) qui peut former une paroi pour la première empreinte de moulage (18) lors de la formation d'une première pièce de moulage par injection (2), et au moins une deuxième partie de moule (19, 20 et 21) qui peut former une paroi pour la deuxième empreinte de moulage (22) lors de la formation d'une deuxième pièce de moulage par injection (4), et **en ce que**, au cours de la présentation alternée, on obtient un repositionnement réciproque de chaque première pièce concernée de moulage par injection (2), de telle sorte qu'elle aboutisse dans la deuxième empreinte de moulage correspondante (22).

2. Procédé selon la revendication 1, **caractérisé en ce que** le repositionnement susmentionné est mis en oeuvre en modifiant les emplacements des premières pièces de moulage par injection (2) après la fabrication de ces dernières, en les retirant d'une partie de moule avec laquelle elles ont été fabriquées, pour les replacer dans l'autre partie de moule qui appartient à la même série.

3. Procédé selon la revendication 2, **caractérisé en ce qu'**on déplace les premières pièces de moulage par injection (2) au moyen d'un élément de transfert (38-54) qui est actif entre les parties de moule (7-8, 10-11, 13-14) des séries (6-9-12) concernées ou au moyen d'un robot.

4. Procédé selon la revendication 1, **caractérisé en ce que** le repositionnement susmentionné est mis en oeuvre en laissant les premières pièces de moulage par injection (2), après leur fabrication, lorsqu'on ouvre le moule, sur la partie de moule (7) de la première série (6) dans laquelle elles ont été fabriquées, sur la partie de moule (10) de la deuxième série (9) dans laquelle elles ont été fabriquées, respectivement, et en s'assurant que, lors de la coopération suivante de la première série (6) avec la troisième série (12), de la deuxième série (9) avec la troisième série (12), respectivement, la position réciproque des parties de moule (7-8) de la première série (6) par rapport à la troisième série (12) et des parties de moule (10-11) de la deuxième série (9) par rapport aux parties de moule (13-14) de la troisième série (12), respectivement, a changé.

5. Procédé selon la revendication 4, **caractérisé en ce que** la position réciproque change en soumettant une ou plusieurs des séries susmentionnées (6-9) des parties de moule, à une rotation, en particulier par rapport à un support (27) sur lequel elles sont prévues.

6. Procédé selon la revendication 1, **caractérisé en ce que** le repositionnement susmentionné est mis en oeuvre en laissant les premières pièces de moulage par injection (2), après leur fabrication, lors de l'ouverture du moule, sur la partie de moule (13) concernée de la troisième série (12), et en faisant usage d'une première série (6) et d'une deuxième série (9) dont les parties de moule (7-8, 10-11) respectivement prennent des positions opposées.

7. Procédé selon l'une quelconque des revendications précédentes, **caractérisé en ce que** la première série de parties de moule (6) et la deuxième série de parties de moule (9) coopèrent de préférence en alternance avec la troisième série de parties de moule (12) en faisant en sorte que la première série et la deuxième série (6-9) d'une part et la troisième série (12) d'autre part mettent en oeuvre un mouvement rotatif réciproque.

8. Procédé selon la revendication 7, **caractérisé en ce que** le mouvement rotatif susmentionné est réalisé autour d'un axe de rotation (28) qui est parallèle à la direction de fermeture des parties de moule concernées.

9. Procédé selon la revendication 8, **caractérisé en ce que** la troisième série de parties de moule (12) est montée de telle sorte qu'elle ne peut entrer en rotation, et **en ce que** la première série (6) et la deuxième série (9) effectuent des rotations autour d'un axe de rotation (28) situé à l'extérieur de la troisième série (12).

10. Procédé selon la revendication 7, **caractérisé en ce qu'**il est fait usage d'une première série de parties de moule (6) et d'une deuxième série de parties de moule (9) prévues sur une structure de support commune (56), de telle sorte que, d'un point de vue général, elles sont disposées réciproquement en formant un angle avec leurs zones de surface d'appui, et de telle sorte que la première série de parties de moule (6) et la deuxième série de parties de moule (9) peuvent venir se placer en alternance à l'opposé de la troisième série de parties de moule (12) via la mise en rotation de la structure de support susmentionnée (56) autour d'un axe de rotation (57) qui s'étend le long de la bissectrice entre les deux zones de surface d'appui susmentionnées.

11. Procédé selon la revendication 7, **caractérisé en ce que** la troisième série de parties de moule (12A-12B-12C-12D, 12E-12F-12G-12H), afin de les faire travailler en alternance de manière conjointe avec la première série (6) et la deuxième série (9), effectue des rotations entre la première série (6) et la deuxième série (9).

12. Procédé selon la revendication 17 ou 11, **caractérisé en ce que** la première série de parties de moule (6) et la deuxième série de parties de moule (9) sont orientées l'une vers l'autre avec leurs zones de surface d'appui, et **en ce que** la troisième série de parties de moule (12A-12B-12C-12D, 12E-12F-12G-12H) effectue des rotations intermédiaires le long de l'axe de rotation (53) s'étendant en diagonale dans la direction de fermeture du moule.

13. Procédé selon la revendication 11 ou 12, **caractérisé en ce qu'**il est fait usage d'une troisième série de parties de moule (12A-12B-12C-12D, 12E-12F-12G-12H) qui est réalisé un ou moins grande partie, de telle sorte que l'on obtient deux troisièmes séries ou plus, si bien que, lorsque les parties de moule se ferment à chaque cycle de moulage par injection, une troisième série coopère avec la première série (6), juste lorsqu'une autre troisième série coopère avec la deuxième série (9).

14. Procédé selon l'une quelconque des revendications précédentes, **caractérisé en ce que**, tandis que le moule est fermé, au moins une série de parties de moule (12A-12B-12C-12D, 12E-12F-12G-12H) est maintenue à l'écart du cycle de moulage par injection.

15. Procédé selon la revendication 14, **caractérisé en ce qu'**à la série de parties de moule (12A-12B-12C-12D, 12E-12F-12G-12H) qui est maintenu à l'extérieur du cycle de moulage par injection, on met en oeuvre au moins un repositionnement comme indiqué ci-dessus.

16. Procédé selon l'une quelconque des revendications 1 à 6, **caractérisé en ce que** la première série de parties de moule (6) et la deuxième série de parties de moule (9) travaillent en alternance conjointement avec la troisième série de parties de moule (12) en soumettant la première série et la deuxième série (6-9) d'une part et la troisième série (12) d'autre part à un mouvement de translation (T) en alternance.

17. Dispositif pour la fabrication de pièces de moulage par injection, en particulier conformément au procédé selon l'une quelconque des revendications précédentes, constitué principalement d'un moule possédant au moins trois séries de parties de moule, une première série (6), une deuxième série (9) et une troisième série (12A-12B-12C-12D, 12E-12F-12G-12H) respectivement, un ou plusieurs mécanismes de mise en mouvement (26) qui permettent à la première série de parties de moule (6) et à la deuxième série de parties de moule (9) de travailler en alternance de manière conjointe avec la troisième série de parties de moule (12) dans le but d'injecter au moins une première pièce de moulage par injection (2) ainsi qu'au moins une deuxième pièce de moulage par injection (4) dans les empreintes de moulage ainsi obtenues, des moyens (32) pour ouvrir et pour fermer le moule, et des agrégats de moulage par injection (35, 36) pour l'injection des composants respectifs (3, 5), **caractérisé en ce que** chaque série de parties de moule possède au moins une première partie de moule (15, 16, 17) qui peut former une paroi pour la première empreinte de moulage (18) lors de la formation d'une première pièce de moulage par injection (2), et au moins une deuxième partie de moule (19, 20, 21) qui peut former une paroi pour la deuxième empreinte de moulage (22) lors de la formation d'une deuxième pièce de moulage par injection (4), et **en ce qu'**il comprend également des dispositifs (37) qui permettent, lors de la présentation alternée l'une à l'autre des parties de moule susmentionnées, de mettre en oeuvre un repositionnement réciproque de chaque première pièce concernée de moulage par injection (2), de telle sorte qu'elle aboutisse dans la deuxième empreinte de moulage annexée (22).

18. Dispositif selon la revendication 17, **caractérisé en ce que** les parties de moule (7-8, 10-11, 13-14) de la même série (6-9-12) forment un tout, en d'autres termes sous la forme d'un seul et même bloc de moule (23-24-25) ou bien dans un seul et même cadre de moule.

19. Dispositif selon la revendication 17 ou 18, **caractérisé en ce que** le moule est réalisé sous la forme d'un moule à étages.

20. Dispositif selon l'une quelconque des revendications 17 à 19, **caractérisé en ce que** la troisième série de parties de moule (12) et une première série de parties de moule (6) ou une deuxième série de parties de moule (9) travaillant de manière conjointe avec les premières citées, au cours d'un cycle de moulage par injection, sont concentrées dans une zone d'étanchéisation locale unique, de préférence une zone rectangulaire, tandis que l'autre série de parties de moule, c'est-à-dire la deuxième série de parties de moule (9) ou la première série de parties de moule (6) fait saillie par rapport à ladite zone d'étanchéisation.

21. Dispositif selon la revendication 20, **caractérisé en ce que** les séries de parties de moule travaillant de manière conjointe lors d'un cycle de moulage par injection d'une part, et l'autre série de parties de moule susmentionnée faisant saillie, comme mentionné ci-dessus, sont respectivement disposées l'une pardessus l'autre.

22. Dispositif selon la revendication 17, **caractérisé en ce qu'**il comprend des parties de moule qui peuvent être mises en mouvement, comme décrit dans l'une quelconque des revendications 1 à 15, ce dispositif (1) étant en outre muni de moyens pour mettre en mouvement les parties de moule comme telles.
